Europäisches Patentamt

European Patent Office

Office européen des brevets

(19)

(11) Veröffentlichungsnummer : **0 401 400 B1**

(12) **EUROPÄISCHE PATENTSCHRIFT**

(45) Veröffentlichungstag der Patentschrift :
**12.04.95 Patentblatt 95/15**

(51) Int. Cl.$^6$ : **G06F 9/38**

(21) Anmeldenummer : **89110221.2**

(22) Anmeldetag : **06.06.89**

(54) **Datenverarbeitungsanlage mit nach dem Fliessbandprinzip erfolgender Befehlsverarbeitung.**

(43) Veröffentlichungstag der Anmeldung :
**12.12.90 Patentblatt 90/50**

(45) Bekanntmachung des Hinweises auf die
Patenterteilung :
**12.04.95 Patentblatt 95/15**

(84) Benannte Vertragsstaaten :
**AT BE CH DE ES FR GB IT LI NL SE**

(56) Entgegenhaltungen :
**US-A- 4 729 093
IBM TECHNICAL DISCLOSURE BULLETIN,
Band 30, Nr. 2, Juli 1987, Seite 510, NewYork,
US; "New Context Bit"**

(56) Entgegenhaltungen :
**IBM TECHNICAL DISCLOSURE BULLETIN
1987, Band 26, Nr. 5, Oktober 1983, Seiten
2257-2260, New York, US; J. JAUDIER et al.:
"Controlled Instruction Buffer Prefetch for a
Processor"
INTERNATIONAL SWITCHING SYMPOSIUM,
Phoenix, US, 15.-20. März 1987, Seiten 209-216,
IEEE, New York, US; J. JAUDIER et al.: "A New
Architecture and anEnhanced Technology for
Telephone Exchange Main Processors"**

(73) Patentinhaber : **Siemens Nixdorf
Informationssysteme Aktiengesellschaft
Fürstenallee 7
D-33102 Paderborn (DE)**

(72) Erfinder : **Fehn, Joachim, Dipl.-Ing.
Gustav-Heinemann-Ring 12
D-8000 München 83 (DE)**

(74) Vertreter : **Fuchs, Franz-Josef, Dr.-Ing. et al
Postfach 22 13 17
D-80503 München (DE)**

EP 0 401 400 B1

**Beschreibung**

Die Erfindung bezieht sich auf eine Datenverarbeitungsanlage mit nach dem Fließbandprinzip erfolgender Befehlsverarbeitung entsprechend dem Oberbegriff des Patentanspruches 1.

Die Verarbeitung von Befehlen nach dem Fließbandprinzip bringt es zwangsläufig mit sich, daß die in den einzelnen Verarbeitungsstufen entstehenden Anforderungen an das Speichersystem koordiniert werden müssen. Können andererseits Anforderungen nicht rechtzeitig bearbeitet werden, ergeben sich Verzögerungen für die zugehörige Bearbeitungseinheit, die sich wiederum auf andere Bearbeitungseinheiten auswirken.

Da sich Verzögerungen bei der endgültigen Ausführung von Befehlen in der Regel am stärksten auf die Verarbeitungsleistung einer Datenverarbeitungsanlage auswirken, werden die Anforderungen des Ausführungsprozessors für das Lesen bzw. Schreiben an das Arbeitsspeichersystem mit höchster Priorität gegenüber den konkurrierenden Anforderungen des Aufbereitungsprozessors behandelt, wobei das Nachlesen von Befehlsblöcken bei entsprechend geleertem Befehlspuffer am Ende der vorgegebenen Prioritätsskala eingeordnet ist. Die sich daraus ergebende übliche Rangfolge bei der Behandlung von Anforderungen an das Speichersystem hat sich für die meisten zu verarbeitenden Befehlsabläufe im Durchschnitt als günstig erwiesen. Andererseits kann nicht übersehen werden, daß die Festlegung vorgegebener Prioritäten auf die einzelnen Befehlsfolgen sehr unterschiedliche Auswirkungen hinsichtlich der Verarbeitungsleistung hat und andererseits recht unterschiedliche Abläufe bewirken kann.

Aufgabe der Erfindung ist es daher, durch eine veränderte Prioritätsverteilung und/oder durch einstellbare Prioritätszuordnungen die Verarbeitungsleistung einer Datenverarbeitungsanlage zu steigern.

Dies wird einerseits durch die Maßnahmen gemäß dem Patentanspruch 1 erreicht, indem Anforderungen für das Befehlsnachlesen bei Sprungbefehlen gegenüber den bei der Befehlsausführung entstehenden Anforderungen bevorzugt werden. Dadurch wird bei der überwiegenden Anzahl von Befehlsfolgen vermieden, daß das Befehlsnachlesen verzögert und dadurch jeweils ein unnötiger Verlust von einem Arbeitszyklus entsteht.

Eine andere Maßnahme gemäß Patentanspruch 4 sieht vor, daß die am Ende der Prioritätsskala rangierenden Anforderungen bei Unterschreiten eines vorgegebenen Füllungsgrades für die jeweils aktive Befehlspufferhälfte priorisiert werden, d.h. deren Prioritätsrang dynamisch angehoben wird, so daß diese Anforderungen mit höherer Priorität behandelt und ein sonst mögliches Leerlaufen des Befehlspuffers, was mit einem Verlust von zwei Arbeitszyklen verbunden ist, verhindert wird. Durch eine zusätzliche Einstellbarkeit der den priorisierten Anforderungen zugewiesenen Priorität gemäß Patentanspruch 5 können durch geeignete Kombinationen von vorgegebenem Füllungsgrad und zugewiesenem vorgegebenem Prioritätsrang für eine Reihe von Befehlsfolgen leistungsgünstigere Abläufe realisiert werden.

Einzelheiten der Erfindung seien nachfolgend anhand von in der Zeichnung dargestellten Ausführungsbeispielen näher erläutert. Im einzelnen zeigen:

| | |
|---|---|
| FIG 1 | ein Prinzipschaltbild mit gemäß der Erfindung geänderter Prioritätssteuerung, |
| FIG 2 | ein erstes Ausführungsbeispiel für die geänderte Prioritätssteuerung von FIG 1, |
| FIG 3 und FIG 4 | Ablaufdiagramme zur Erläuterung der Auswirkung durch die Verwendung der Prioritätssteuerung von FIG 2, |
| FIG 5 | ein Ablaufdiagramm für eine Befehlsfolge, bei der ein rechtzeitiges Befehlsnachlesen nicht möglich ist, |
| FIG 6 und FIG 7 | ein zweites Ausführungsbeispiel für die geänderte Prioritätssteuerung von FIG 1 und |
| FIG 8 und FIG 9 | Ablaufdiagramme zur Erläuterung der Auswirkung durch die Prioritätssteuerung von FIG 6 und FIG 7 auf die Befehlsfolge von FIG 5. |

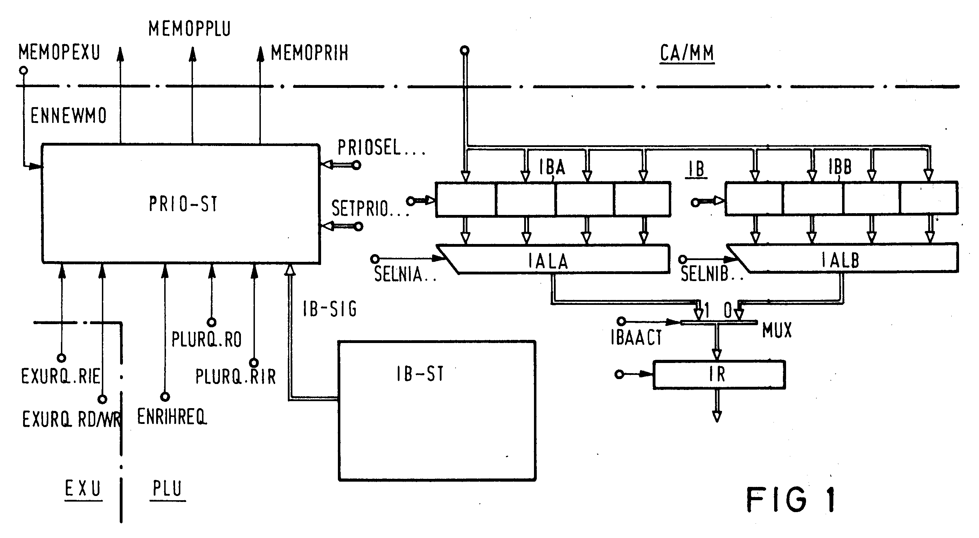

Das Prinzipschaltbild von FIG 1 zeigt Teile des Befehlspuffers IB des Aufbereitungsprozessors PLU für die Bereitstellung von aus dem Arbeitsspeichersystem CA/MM gelesenen Befehlen im Befehlsregister IR. Der Befehlspuffer IB besteht aus zwei Teilen, von denen ein Teil, z.B. IBA, jeweils Befehle des gerade zu verarbeitenden Befehlsstromes und ein anderer Teil, z.B. IBB, jeweils Befehle eines bei erfüllten Sprungbefehlen zu verarbeitenden Befehlsstromes aufnimmt. Jeder Pufferspeicherteil IBA und IBB speichert z.B. 32 Byte und ist in zwei Hälften gegliedert, die unabhängig voneinander mit einer von der Puffersteuerung IB-ST ausgelösten Speicheranforderungen RIHREQ geladen werden. Aus dem jeweils durch das Signal IBAACT gekennzeichneten Pufferspeicherteil wird anhand der Auswahlsignale SELNIA... bzw. SELNIB... durch die Steuerschalter IALA bzw. IALB der jeweils nächste Befehl ausgewählt und dem Befehlsregister IR zugeführt.

Alle für die Steuerung des Befehlspuffers IB benötigten Steuersignale werden von der Puffersteuerung IB-ST geliefert, die in an sich bekannter Weise überwacht, welcher Pufferteil zuständig ist, wie der jeweilige Füllungsgrad ist und in welchem Umfang die gespeicherten Befehlsdaten gültig sind.

Speicheranforderungen an das gemeinsame Speichersystem CA/MM laufen über eine gemeinsame Schnittstelle, die die Anforderungen vom Ausführungsprozessor EXU und vom Aufbereitungsprozessor PLU koordiniert. Diese Koordinierung erfolgt durch die Prioritätssteuerung PRIO-ST, die gemäß der Erfindung aus-

EP 0 401 400 B1

gebildet ist, und die mit den Signalen MEMOP... die von den einzelnen Anforderungsquellen stammenden Parameter für den Speicherzugriff freigibt.

Bevor hierauf jedoch näher eingegangen werden soll, sei zunächst erläutert, welche Arten von Speicheranforderungen im einzelnen entstehen können.

Das Laden des jeweils ersten Befehlsblockes von z.B. 16 Byte eines Befehlsstromes in einen freien Teil IBA oder IBB des Befehlspuffers IB wird immer vom Ausführungsprozessor EXU mit dem Signal EXURQ.RIE ausgelöst. Dieses Signal entsteht ohne konkurrierende Anforderungen, da damit der Aufbereitungsprozessor PLU erst gestartet wird. Das Laden der jeweils zweiten und aller weiteren Befehlsblöcke erfolgt dann abhängig vom Füllungsgrad des jeweils aktiven Teils des Befehlspuffers IB mit dem Signal RIHRQ, das daher von Steuersignalen IB-SIG der Puffersteuerung IB-ST in Verbindung mit dem Freigabesignal ENRIHRQ abgeleitet wird.

Weiterhin kennzeichnet das Signal EXURQ.RD/WR ein Schreiben oder Lesen durch den Ausführungsprozessor EXU, während der Aufbereitungsprozessor PLU mit dem Signal PLURQ.RO das Lesen eines Arbeitsspeicheroperanden und mit dem Signal PLURQ.RIR ein Lesen von Befehlen nach einem Sprungbefehl in den nichtaktiven Teil des Befehlspuffers anzeigt.

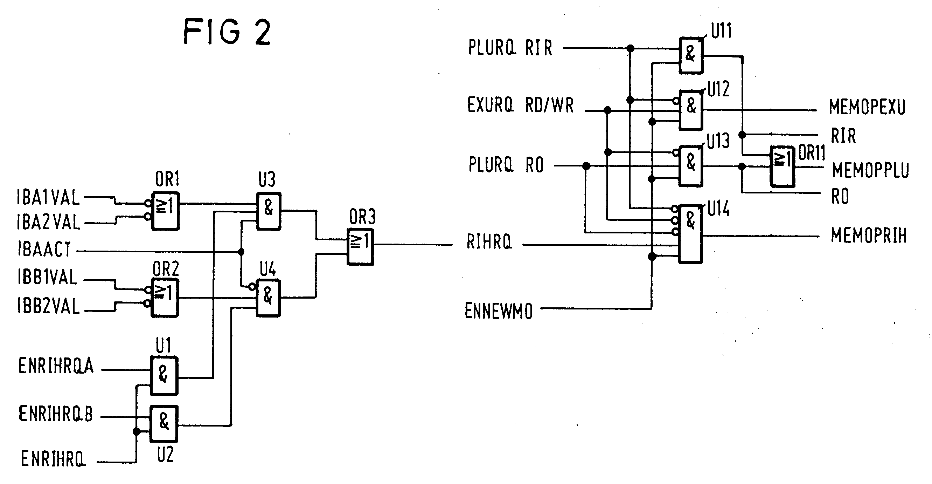

FIG 2 zeigt das Schaltbild der Prioritätssteuerung PRIO-ST von FIG 1, bei der im Gegensatz zu den bekannten Lösungen das Befehlslesen nach Sprungbefehlen mit der Anforderung PLURQ.RIR gegenüber allen Anforderungen mit Ausnahme von EXURQ.RIE priorisiert ist und für die daher folgende Prioritätsrangfolge im Vergleich zur üblichen gilt:

|                          | Neu:         | Alt:          |
|--------------------------|--------------|---------------|
| Höchste Priorität:       | PLURQ.RIR    | EXURQ.RD/WR   |
|                          | EXURQ.RD/WR  | PLURQ.RIR/RO  |
|                          | PLURQ.RO     |               |
| Niedrigste Priorität:    | RIHRQ        | RIHRQ         |

Diese Rangfolge wird durch die UND-Glieder U11 bis U14 im rechten Teil des Schaltbildes in an sich bekannter Weise gesteuert, wobei das Freigabesignal ENNEWMO die UND-Glieder freigibt, wenn die Speichersteuerung zur Entgegennahme einer neuen Anforderung bereit ist. Die Ausgangssignale MEMOPEXU, MEMOPRIH und MEMOPPLU kennzeichnen dabei den jeweils ablaufenden Speicherzugriff, wobei beim letzten Signal MEMOPPLU wegen der Mehrfachauslösung zusätzliche Signale RIR oder RO die jeweilige Anforderungsquelle kennzeichnen.

Der linke Teil des Schaltbildes von FIG 2 zeigt die Ableitung des Anforderungssignales RIHRQ von den Steuersignalen der Puffersteuerung IB-ST in FIG 1, wobei die Signale IBA1VAL bzw. IBB1VAL und IBA2VAL bzw. IBB2VAL anzeigen, ob die erste oder die zweite Hälfte beider Teilpuffer IBA und IBB mit gültigen Befehlen geladen ist. Ist eine der Hälften leer, wird über die ODER-Glieder OR1 bzw. OR2 ein Steuersignal für die nachgeschalteten UND-Glieder U3 bzw. U4 erzeugt und mit dem den gerade aktiven Pufferteil kennzeichnenden Signal IBAACT verknüpft. Außerdem wird mit dem Freigabesignal ENRIHRQ und einem individuellen Freigabesignal ENRIHRQA bwz. ENRIHRQB für die beiden Teilpuffer die Freigabe der UND-Glieder U3 bzw. U4 gesteuert, die das durch das ODER-Glied OR3 gebündelte Anforderungssignal RIHRQ erzeugen.

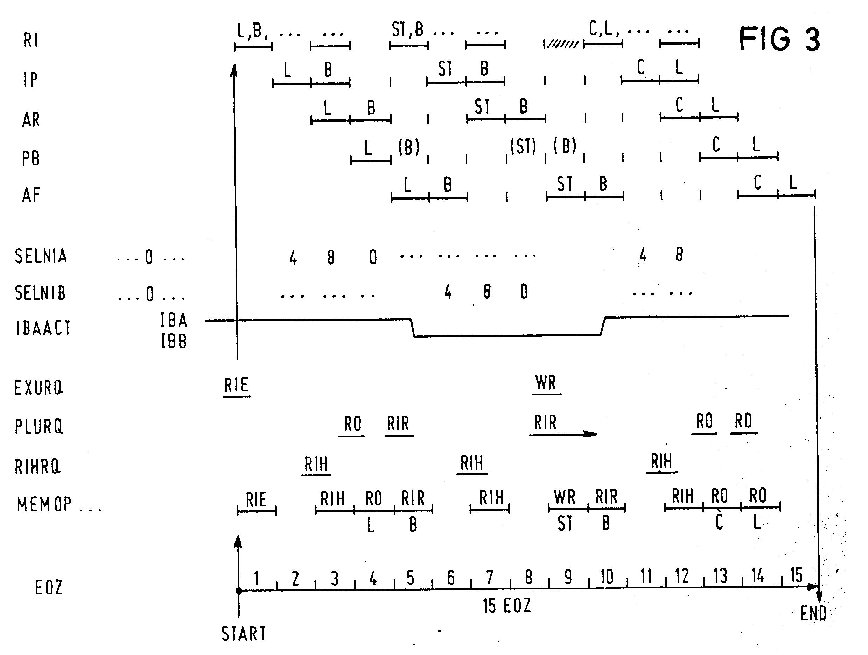

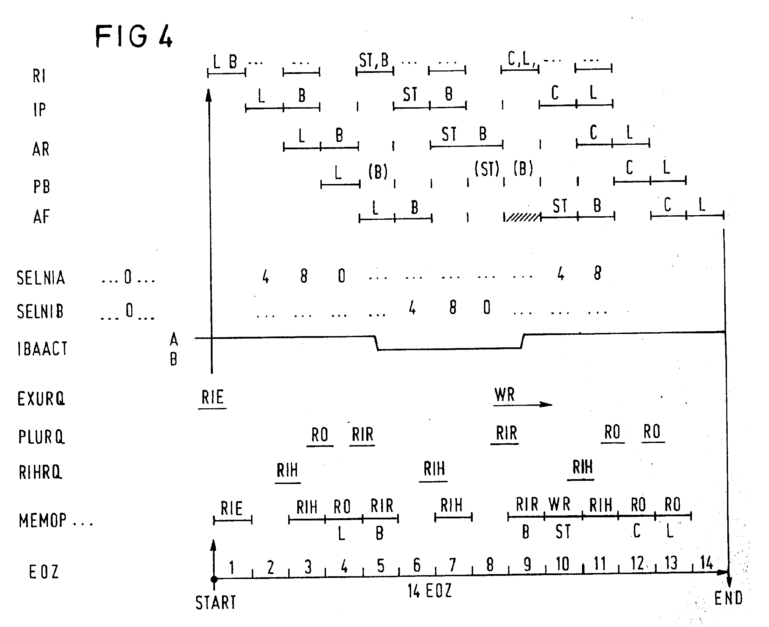

Anhand der Ablaufdiagramme von FIG 3 und FIG 4, die sich beide auf den Steuerungsablauf beim Auftreten von erfüllten Sprungbefehlen beziehen, soll die durch die Prioritätssteuerung von FIG 2 erzielte Auswirkung erläutert werden. Die oberen vier Zeilen der Ablaufdiagramme beziehen sich jeweils auf die einzelnen Verarbeitungsstufen des Aufbereitungsprozessors PLU, nämlich das Befehlslesen RI, auf die Befehlsinterpretation IP, auf das Adressenrechnen AR und auf die Parameterbereitstellung PB, während die fünfte Zeile sich auf die Befehlsausführung AF durch den Ausführungsprozessor EXU bezieht. Danach folgt die befehlslängenabhängige Adressenfortschreibung mit den Auswahlsignalen SELNIA und SELNIB für die beiden Teilpuffer, wobei das Signal IBAACT anzeigt, welcher Teilpuffer, IBA oder IBB, aktiv ist. Darunter sind weiterhin die Anforderungen EXURQ, PLURQ und RIHRQ des Ausführungsprozessors EXU, des Aufbereitungsprozessors PLU und der Puffersteuerung IB-ST aufgezeigt, wobei jede Anforderung zusätzlich mit einem Hinweis auf deren Art versehen ist. Die Zeile MEMOP gibt die daraus aufgrund der jeweiligen Prioritätssteuerung resultierende Ablauffolge für die Speicheroperationen wieder. Die Darstellung in allen Zeilen richtet sich nach dem durch die Arbeitszyklen EOZ vorgegebenen Zeitraster.

3

EP 0 401 400 B1

Für beide Ablaufdiagramme gilt daher folgender Ablauf: Zu Beginn weisen die Signale SELNIA und SELNIB auf die Byte-Adressen "O". Der Ausführungsprozessor EXU startet dann mit einer "RIE"-Anforderung den Aufbereitungsprozessor PLU und löst eine entsprechende Speicheroperation aus. Demzufolge werden in Zeile RI die ersten Befehle L, B, ... in den Befehlspuffer gelesen, von denen der erste Befehl L gemäß der Zeile IP im nächsten Arbeitszyklus EOZ2 interpretiert wird. Außerdem wird die Anforderung RIH für das Lesen des zweiten Befehlsblockes wirksam, die im nächsten Arbeitszyklus EOZ3 während der Adressenrechnung für den Befehl L behandelt wird. Letzteres führt zu einer Operandenleseanforderung RO, die entsprechend der Parameterbereitstellung für diesen Befehl im Arbeitszyklus EOZ4 ausgeführt wird, so daß im Arbeitszyklus EOZ5 der Befehl L gemäß Zeile AF ausgeführt werden kann.

Analog wird mit einer Phasenverschiebung von einem Arbeitszyklus der Befehl B interpretiert und danach die Adressenrechnung durchgeführt. Da es sich um einen Sprungbefehl handelt, wird ein Lesen des ersten Befehlsblockes für die alternative Befehlsfolge in den anderen Teilpuffer IBB erforderlich und es wird die Anforderung RIR gesetzt, während die lineare Befehlsaufbereitung für den dritten Befehl der ersten Folge unterbleibt. Im Arbeitszyklus EOZ5 wird daher parallel zur Ausführung des ersten Befehles L der benötigte Befehlsblock mit den Befehlen ST, B, ... in den anderen Teilpuffer gelesen und die Aufbereitung mit der Interpretation des ersten Befehls ST (Zeile IP) fortgesetzt, während der Sprungbefehl B ausgeführt wird (Zeile AF). Außerdem wird eine neue Anforderung RIH gesetzt, um den zweiten Befehlsblock für die neue Befehlsfolge zu lesen, und diese im Arbeitszyklus EOZ7 mit einer entsprechenden Speicheroperation beantwortet. Da der Befehl ST eine Speicherschreiboperation erfordert, wird in der zugehörigen Parameterbereitstellungsphase PB eine Schreibanforderung WR und, da der zweite Befehl B dieser neuen Folge ebenfalls ein Sprungbefehl ist, eine Leseanforderung RIR für den neuen Befehlsweg gesetzt.

Da in FIG 3 die Anforderung des Aufbereitungsprozessors EXU bevorrechtigt ist, wird erst diese beantwortet (EOZ9) und dann das Befehlslesen ausgeführt. Die danach zu bearbeitenden Befehle L und C werden dann ohne Unterbrechung durch die einzelnen Bearbeitungsstufen bis zur Ausführung weitergereicht, wobei im Arbeitszyklus EOU11 erneut eine Anforderung RIH für das Nachlesen des zweiten Befehlsblockes und danach in der Adressenrechnungsphase AR für die Befehle C und L jeweils eine Operandenleseanforderung RO ausgelöst wird, die nacheinander ausgeführt werden.

Vom Start START zu Beginn des Arbeitszyklus EOZ1 bis zur Ausführung des letzten gezeigten Befehles L werden fünfzehn Arbeitszyklen benötigt, wobei mit der bevorrechtigten Anforderung WR durch den Ausführungsprozessor EXU im Arbeitszyklus EOZ8 die Ausführung der Anforderung RIR verzögert wird, was zu einem in Zeile RI schraffiert gekennzeichneten Verlustzyklus bei der Bereitstellung der benötigten Befehle führt.

Die in den Zeilen SELNIA und SELNIB angegebenen Bytenummern zeigen dabei die Verschiebung des Lesezeigers auf den Anfang des jeweils nächsten in das Befehlsregister IR zu übernehmenden Befehls abhängig von der jeweiligen Befehlslänge des jeweils entsprechend Zeile IP interpretierten Befehls und deren Nullsetzung bei Umschaltung auf den anderen Teilpuffer. Außerdem ist berücksichtigt, daß eine Anforderung RIH für das Lesen eines zweiten oder weiteren Befehls nicht unmittelbar nach den Anforderungen RIE oder RIR oder RIH für denselben Teilpuffer erfolgen kann, sondern wenigstens ein Arbeitszyklus dazwischenliegen muß.

Dem Ablaufdiagramm von FIG 4 liegt dieselbe Befehlsfolge zugrunde wie bei dem von FIG 3. Bis zum Ende des Arbeitszyklus EOZ8 besteht daher Übereinstimmung. Infolge der geänderten Bearbeitungspriorität durch die Prioritätssteuerung von FIG 2 wird hierbei die Anforderung RIR der Anforderung WR vorgezogen und damit bereits im Arbeitszyklus EOZ9 der neue Befehlsblock mit den Befehlen C, L, ... gelesen, so daß diese einen Arbeitszyklus früher für die Aufbereitung zur Verfügung stehen, während die Ausführung des Befehls ST um einen Arbeitszyklus verzögert im Arbeitszyklus EOZ10 stattfindet. Insgesamt werden aber hierbei für dieselbe Befehlsfolge nur 14 Arbeitszyklen statt 15 Arbeitszyklen benötigt und damit ein Arbeitszyklus gewonnen.

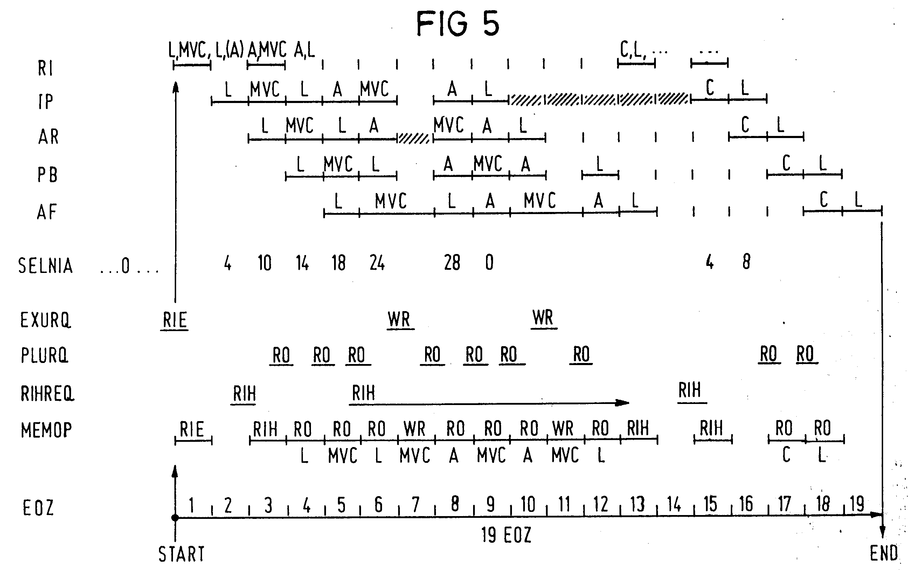

FIG 5 zeigt in Anlehnung an die Ablaufdiagramme von FIG 3 und FIG 4 ein gleichartiges Ablaufdiagramm für eine andere Befehlsfolge ohne Sprungbefehl, so daß kein Wechsel des Teilpuffers notwendig ist und daher auf die Darstellung der Zeilen SELNIB und IBAACT verzichtet wurde. Der Ablauf zu Beginn der Bearbeitung mit wirksamwerdender Anforderung RIE für das erste Befehlslesen und RIH für das zweite Befehlslesen entspricht dem in den anderen Ablaufdiagrammen, wobei ab dem Arbeitszyklus EOZ4 zunächst Anforderungen RO für das Operandenlesen und WR für durch die Befehle MVC bedingte Speicherschreibzugriffe ausgelöst werden, während eine im Arbeitszyklus EOZ5 entstehende Nachleseanforderung RIH wegen Leerung der ersten Hälfte des Pufferteiles - Überschreitung des den Beginn der zweiten Pufferhälfte anzeigenden Grenzwertes 16 bei der Byte-Adressierung - infolge der geringeren Priorität nicht zum Zuge kommt, so daß nach Interpretation des letzten Befehles L vom ersten Befehlsblock (EOZ9) zunächst kein weiterer Befehl aufbereitet werden kann, was in Zeile IP schraffiert gekennzeichnet ist. Erst im Arbeitszyklus EOZ13 kann beispielsweise die Speicheroperation für das Befehlslesen durchgeführt und wegen einer RIH-Anforderung die Befehlsinterpretation um einen Arbeitszyklus weiter verzögert wieder aufgenommen werden. Eine laufende Beanspru-

4

chung der Speicherschnittstellen durch bevorrechtigte Anforderungen kann somit zum Leerlaufen des Puffers und damit zu leistungsmindernden Verlustzyklen führen.

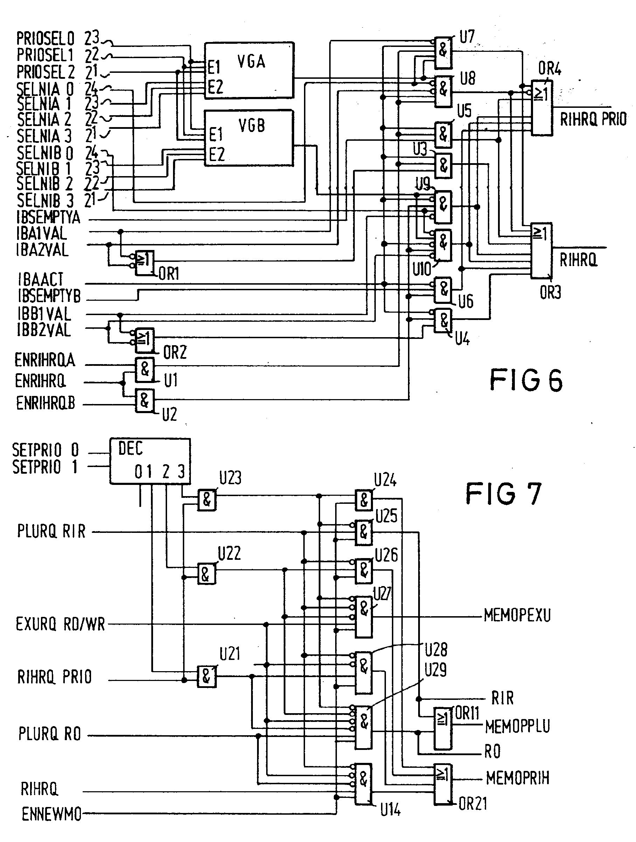

FIG 6 und FIG 7 zeigen zusammen ein weiteres Ausführungsbeispiel für die Prioritätssteuerung PRIO-ST von FIG 1 mit veränderbarer Priorität für Nachleseanforderungen RIHRQ, indem abhängig vom Unterschreiten eines voreinstellbaren Füllungsgrades neben der normalen Anforderung RIHRQ eine prioritätsbehaftete Anforderung RIHRQ.PRIO ausgelöst und dieser prioritätsbehafteten Anforderung durch eine weitere Voreinstellung eine vorgegebene Priorität im Vergleich zu den anderen Speicheranforderungen zugewiesen wird.

Der dem linken Schaltungsteil von FIG 2 entsprechende Schalttungsteil von FIG 6 zeigt die Erzeugung dieses zusätzlichen Anforderungssignals, wozu die Schaltung von FIG 6 gegenüber dem entsprechenden Teil von FIG 2 erweitert ist und gleiche Bauelemente mit gleichen Bezugszeichen gekennzeichnet sind. Für die Überwachung der beiden Teilpuffer werden dazu je ein Vergleicher VGA bzw. VGB und je ein Steuersignal IBSEMPTYA bzw. IBSEMPTYB benötigt.

Letztere zeigen an, daß der ausgewählte Befehl in einer ungültigen Hälfte liegt oder bei Grenzüberschreitung in eine ungültige Hälfte hineinragt. Außerdem lassen sich mit diesen Steuersignalen durch die Signale SELNIA bzw. SELNIB bedingte Zweideutigkeiten, die beispielsweise beim Adressenwert "O" gegeben sind, umgehen. Die Signale IBSEMPTYA bzw. IBSEMPTYB führen daher durch die UND-Glieder U5 bzw. U6 in Verbindung mit dem Signal IBAACT über das bündelnde ODER-Glied OR4 zum priorisierten Anforderungssignal RIHRQ.PRIO.

Die Vergleicher VGA und VGB werden jeweils durch die Einstellsignale PRIOSELO/1/2 auf eine vorgegebene Anzahl von jeweils 2 Byte umfassenden Einheiten eingestellt. Überschreitet die von den Auswahlsignalen SELNIA1/2/3 bzw. SELNIB 1/2/3 vorgegebene Adresse - das Signal SELINA0 bzw. SELNIB0 ist wegen der 2-Byte-Einheiten-Zählung nicht berücksichtigt - den voreingestellten Wert und ist die andere Pufferhälfte leer, dann führt das über die UND-Glieder U7 oder U8 bzw. U9 oder U10, je nachdem welche Hälfte im aktiven Puffer betroffen ist, ebenfalls zum Anforderungssignal RIHRQ.PRIO. Beim Wert $\Sigma$ PRIOSEL = 0 bedeutet das, daß die Priorisierung bereits nach dem Lesen der ersten beiden Bytes der zuständigen Hälfte erfolgt, während beim Wert $\Sigma$ PRIOSEL = 7 keine Priorisierung mehr erfolgt.

Das priorisierte Anforderungssignal RIHRQ.PRIO wird neben dem unpriorisierten Anforderungssignal RIHRQ dem Schaltungsteil von FIG 7 zugeführt, der dem rechten Schaltungsteil von FIG 2 entspricht, wobei gleiche Bauelemente wiederum gleich bezeichnet sind. Zusätzlich ist eine aus dem Decoder DEC und den UND-Gliedern U21 bis U23 bestehende Auswahlschaltung vorgesehen, die dem von FIG 6 gelieferten priorisierten Anforderungssignal RIHRQ.PRIO abhängig von der Einstellung durch die Signale SETPRIO O/I eine vorgegebene von mehreren möglichen Prioritäten zuweist. Danach ist beispielsweise folgende durch die UND-Glieder U24 bis U29 und U14 in an sich bekannter Weise auswertbare Rangordnung gegeben:

Höchste Priorität:        RIHRQ.PRIO, wenn $\Sigma$ SETPRIO = 3

                       PLURQ.RIR

                       RIHRQ.PRIO, wenn $\Sigma$ SETPRIO = 2

                       EXURQ.RD/WR

                       RIHRQ.PRIO, wenn $\Sigma$ SETPRIO = 1

                       PLURQ.RO

Niedrigste Priorität:       RIHRQ

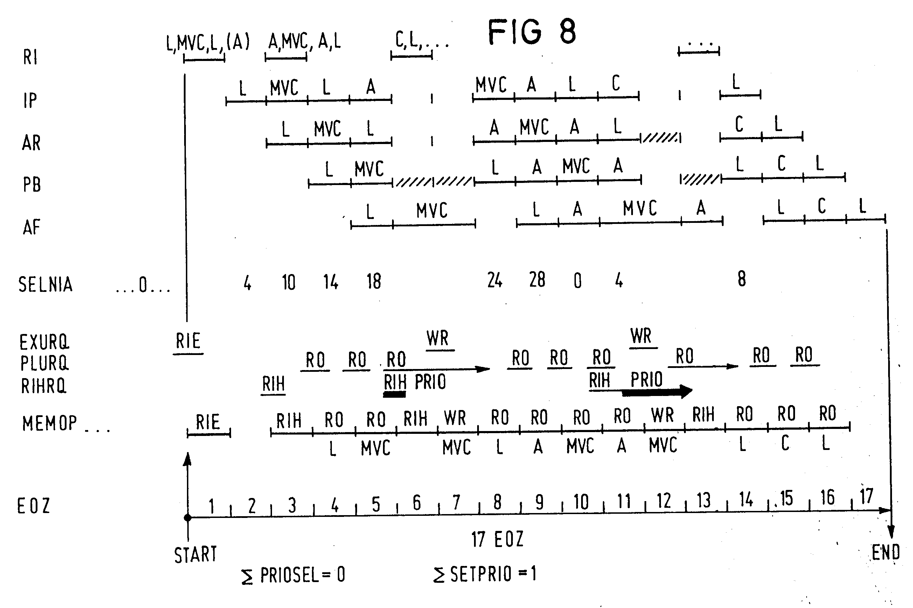

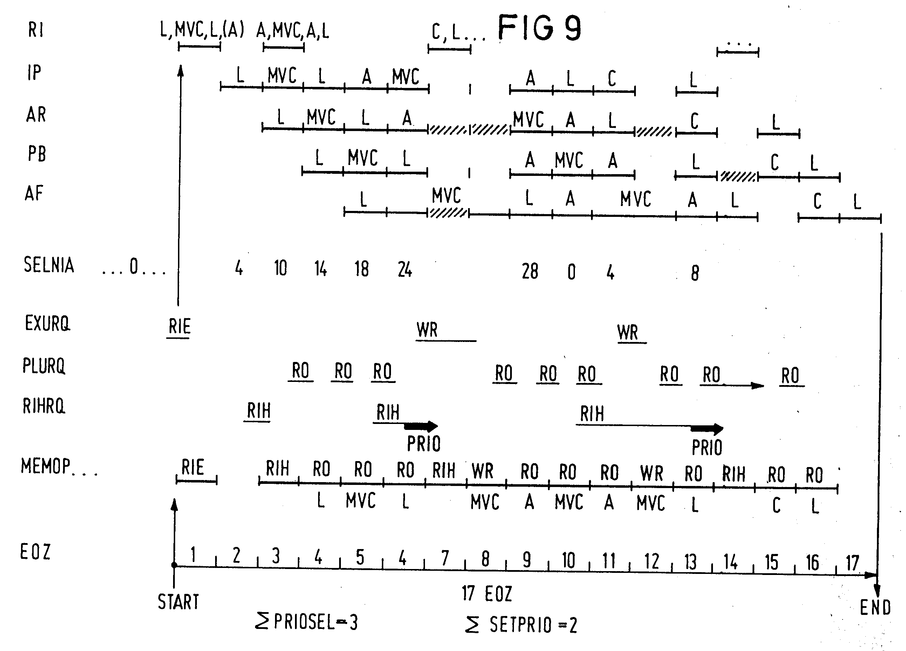

Die Auswirkung dieser Prioritätsanhebung sei anhand von zwei, den Ablaufdiagramm von FIG 8 und FIG 9 zugrundeliegenden Beispielen im Vergleich zum Ablaufdiagramm von FIG 5 bei gleicher Befehlsfolge näher erläutert.

Beim Beispiel gemäß FIG 8 sind Einstellungen mit den Werten $\Sigma$ PRIOSEL = 0 und $\Sigma$ SETPRIO = 1 zugrundegelegt, d.h. priorisierte Anforderungen RIHRQ.PRIO werden bereits nach dem Lesen von 2 Byte aus einer Hälfte ausgelöst und im Rang vor Operandenleseanforderungen PLURQ.RO behandelt.

Nach anfänglich gleichem Ablauf bis gegen Ende des Arbeitszyklus EOZ5 wird im Arbeitszyklus EOZ6 die priorisierte Anforderung RIHRQ.PRIO, die parallel zur Anforderung PLURQ.RO entsteht, vorgezogen, während die zweite Anforderung erst im Arbeitszyklus EOZ8 ausgeführt werden kann und alle weiteren Speicheroperationen bis zum Arbeitszyklus EOZ11 entsprechend um einen Arbeitszyklus später ausgeführt werden. Die Priorisierung der Anforderung RIHRQ im Arbeitszyklus EOZ5 ergibt sich daraus, daß mit der Interpretation des Befehls A und der Fortschaltung auf den Beginn des nächsten Befehls MVC - Adressierung von Byte 18 durch SELNIA - die nach Byte 15 folgende Grenze zur anderen Pufferhälfte um zwei Byte überschritten wird und daher $\Sigma$ SELNIA den Wert 1 im Vergleich zum Wert $\Sigma$ PRIOSEL = 0 erreicht. Ebenso wird die nach Adressierung von Byte 0 im Arbeitszyklus EOZ10 ausgelöste Anforderung RIHRQ nach Fortschalten auf Byte 4 im Arbeitszyklus EOZ11 priorisiert, so daß die nachfolgend im Arbeitszyklus EOZ12 entstehende Anforderung PLURQ.RO wiederum zurückstehen muß. Insgesamt führt aber der Ablauf von FIG 8 zu einer Einsparung von zwei Arbeitszyklen gegenüber dem von FIG 5.

Die gleiche Einsparung ergibt sich beim Ablauf gemäß FIG 9, bei dem für die Voreinstellung die Werte $\Sigma$ PRIOSEL = 3 und $\Sigma$ SETPRIO = 2 zugrundegelegt sind, d.h. eine Anforderung RIHRQ wird erst nach Lesen von sechs Byte aus einer Pufferhälfte priorisiert und die priorisierten Anforderungen RIHRQ.PRIO werden im Rang vor den Anforderungen EXURQ.RD/WR und PLURQ.RO behandelt. Im Vergleich zum Ablauf gemäß FIG 8 wird die im Arbeitszyklus EOZ5 entstehende Anforderung RIHRQ zunächst nicht priorisiert, da mit der Adressierung von Byte 18 erst zwei Byte aus der aktiven Pufferhälfte gelesen sind und damit $\Sigma$ SELNIA erst den Wert 1 erreicht. Nach Interpretation des Befehls MVC und Weiterschaltung um sechs Byte auf Byte 24 im Arbeitszyklus EOZ6 überschreitet der von $\Sigma$ SELNIA gelieferte Wert 4 den Wert $\Sigma$ PRIOSEL = 3, so daß die bestehende Anforderung RIHRQ priorisiert wird und wegen $\Sigma$ SETPRIO = 2 der im Arbeitszyklus EOZ6 entstehenden Anforderung EXURQ.WR vorgezogen wird. Ebenso wird die im Arbeitszylus EOZ10 wegen Erreichen der Grenze zur nächsten Pufferhälfte entstehende Anforderung RIHRQ zunächst nicht priorisiert, so daß die anstehenden Anforderungen PLURQ.RO und EXURQ.WR vorrangig behandelt werden, bis im Arbeitszyklus EOZ13 mit Adressierung von Byte 8 der Wert 4 von $\Sigma$ SELNIA erreicht wird.

Eine Gegenüberstellung der Ablaufdiagramme von FIG 5, FIG 8 und FIG 9 läßt erkennen, wie die Bearbeitung einer Befehlsfolge durch die Prioritätssteuerung in unterschiedlicher Weise beeinflußbar ist und wie durch eine auf die einzelnen Befehlsfolgen abgestellte Wahl der Priorisierungsparameter Verlustzyklen eingespart werden können.

**Patentansprüche**

1. Datenverarbeitungsanlage mit nach dem Fließbandprinzip erfolgender Befehlsverarbeitung, bestehend aus einem Befehlsaufbereitungsprozessor (PLU) für Befehlslesen (RI), Befehls-Interpretation (IP), Adressenrechnung (AR) und Parameterbereitstellung (PB), aus einem Befehlsausführungsprozessor (EXU) für die eigentliche Befehlsausführung (AF) und aus einem gemeinsamen Arbeitsspeichersystem (CA/MM) mit einer gemeinsamen Schnittstelle zur Entgegennahme von Anforderungen beider Prozessoren (PLU, EXU) für auszuführende Speicheroperationen und einer Prioritätssteuerung (PRIO-ST) für die verschiedenen Anforderungen, die sich auf das vom Ausführungsprozessor (EXU) veranlaßte jeweils erstmalige Lesen eines Befehlsblockes (EXURQ.RIE) in eine erste Pufferhälfte eines Befehlspuffers (IB) des Aufbereitungsprozessors (PLU), auf das Lesen weiterer Befehlsblöcke bei Freisein einer Pufferhälfte des Befehlspuffers (RIHRQ) oder nach Sprungbefehlen (PLURQ.RIR) und von Operanden (PLURQ.RO) durch den Aufbereitungsprozessor (PLU) oder auf das Lesen bzw. Schreiben (EXURQ.RD/WR) durch den Ausführungsprozessor (EXU) beziehen, wobei von den miteinander konkurrierenden Anforderungen beider Prozessoren (PLU und EXU) die Anforderungen für das durch einen Sprungbefehl ausgelöste Befehlslesen (PLURQ.RIR) des Aufbereitungsprozessors (PLU) vorrangig vor den Lese- bzw. Schreibanforderungen (EXURQ.RD/WR) des Ausführungsprozessors (EXU) behandelt werden.

2. Datenverarbeitungsanlage nach Anspruch 1,
   **dadurch gekennzeichnet,** daß folgende Rangliste mit fallender Priorität für die Berücksichtigung der Anforderungen beider Prozessoren (EXU,PLU) normalerweise gilt:
   1. erstmaliges Lesen eines Befehlsblockes (EXURQ.RIE),
   2. durch einen Sprungbefehl veranlaßtes Lesen eines Befehlsblockes (PLURQ.RIR),
   3. Lesen bzw. Schreiben durch den Ausführungsprozessor (EXURQ.RD/WR),
   4. Operandenlesen durch den Aufbereitungsprozessor (PLURQ.RO) und
   5. Lesen des zweiten oder weiteren Befehlsblockes (RIHRQ).

3. Datenverarbeitungsanlage nach Anspruch 1 oder 2,
   **dadurch gekennzeichnet,** daß die Anforderungen (RIHRQ) zum Nachlesen eines Befehlsblockes in eine freie Pufferhälfte des Befehlspuffers (IBA oder IBB) abhängig von einem voreinstellbaren Füllungsgrad der jeweils aktiven Pufferhälfte unterschiedlich priorisiert werden und daß diesen priorisierten Anforderungen (RIHRQ.PRIO) eine vorgegebene Priorität zugeordnet wird.

4. Datenverarbeitungsanlage mit nach dem Fließbandprinzip erfolgender Befehlsverarbeitung, bestehend aus einem Befehlsaufbereitungsprozessor (PLU) für Befehlslesen (RI), Befehlsinterpretation (IP), Adressenrechnung (AR) und Parameterbereitstellung (PB), aus einem Befehlsausführungsprczessor (EXU) für die eigentliche Befehlsausführung (AF) und aus einem gemeinsamen Arbeitsspeichersystem (CA/MM) mit einer gemeinsamen Schnittstelle zur Entgegennahme von Anforderungen beider Prozessoren (PLU, EXU) für auszuführende Speicheroperationen und einer Prioritätssteuerung (PRIO-ST) für die verschiedenen Anforderungen, die sich auf das vom Ausführungsprozessor (EXU) veranlaßte jeweils erstmalige Lesen eines Befehlsblockes (EXURQ.RIE) in eine erste Pufferhälfte eines Befehlspuffers (IB) des Aufbereitungsprozessors (PLU), auf das Lesen weiterer Befehlsblöcke bei Freisein einer Pufferhälfte des Befehlspuffers (RIHRQ) oder nach Sprungbefehlen (PLURQ.RIR) und von Operanden (PLURQ.RO) durch den Aufbereitungsprozessor (PLU) oder auf das Lesen bzw. Schreiben (EXURQ.RD/WR) durch den Ausführungsprozessor (EXU) beziehen, wobei die Anforderungen (RIHRQ) zum Nachlesen eines Befehlsblockes in eine freie Pufferhälfte des Befehlspuffers (IBA oder IBB) abhängig von einem voreinstellbaren Füllungsgrad der jeweils aktiven Pufferhälfte priorisiert werden und daß diesen priorisierten Anforderungen (RIHRQ.PRIO) eine vorgegebene Priorität zugeordnet wird.

5. Datenverarbeitungsanlage nach Anspruch 3 oder 4,
**dadurch gekennzeichnet,** daß die den priorisierten Anforderungen (RIHRQ.PRIO) zugewiesene Priorität wahlweise einstellbar ist.

6. Datenverarbeitungsanlage nach Anspruch 5,
**dadurch gekennzeichnet,** daß folgende Rangfolge für die Berücksichtigung der Anforderungen beider Prozessoren (EXU,PLU) gilt:
1. erstmaliges Lesen eines Befehlsblockes (EXURQ.RIE),
2. Lesen des zweiten oder weiteren Befehlsblockes bei höchster Prioritätszuweisung (RIHRQ.PRIO3),
3. durch einen Sprungbefehl veranlaßtes Lesen eines Befehlsblockes (PLURQ.RIR),
4. Lesen des zweiten oder weiteren Befehlsblockes bei mittlerer Prioritätszuweisung (RIHRQ.PRIO2),
5. Lesen bzw. Schreiben durch den Ausführungsprozessor (EXURQ.RD/WR),
6. Lesen des zweiten oder weiteren Befehlsblockes bei niedrigster Prioritätszuweisung (RIHRQ.PRIO1),
7. Operandenlesen durch den Aufbereitungsprozessor (PLURQ.RO) und
8. Lesen des zweiten oder weiteren Befehlsblockes ohne Prioritätszuweisung (RIHRQ).

7. Datenverarbeitungsanlage nach einem der Ansprüche 3 bis 6,
**dadurch gekennzeichnet,** daß der Füllungsgrad der jeweils aktiven Pufferhälfte durch einen Vergleicher (VGA) anhand der fortschreitenden Byteadressierung (SELNIA...) für den jeweils nächsten aufzubereitenden Befehl im Vergleich zu einem vorgegebenen Wert (PRIOSEL...) überwacht wird und daß bei Überschreiten dieses Wertes und bei gleichzeitigem Freisein der anderen Pufferhälfte des aktiven Puffers das zusätzliche priorisierte Anforderungssignal (RIHRQ.PRIO) durch logische Verknüpfungsglieder (U7,U8,OR4) erzeugt wird.

8. Datenverarbeitungsanlage nach Anspruch 7 in Verbindung mit Anspruch 5 oder 6,
**dadurch gekennzeichnet,** daß die Prioritätszuweisung für das priorisierte Anforderungssignal (RIHRB.PRIO) durch einen einstellbaren Auswahlschalter (DEC,U21 bis U23) erfolgt, der das priorisierte Anforderungssignal abhängig von einer voreinstellbaren Prioritätsstufe (SETPRIO) auf einen mit der entsprechenden Priorität behafteten Ausgang durchschaltet, der dann von einem Rangfolgenetzwerk (U24 bis U29, U14, OR21) entsprechend berücksichtigt wird.

## Claims

1. Data-processing system having instruction processing which is carried out in accordance with the production line principle, comprising an instruction conditioning processor (PLU) for reading instructions (RI), instruction interpretation (IP), address calculation (AR) and parameter provision (PB), an instruction execution processor (EXU) for actually executing the instructions (AF), and a common user memory system (CA/MM) having a common interface for receiving requests from both processors (PLU, EXU) for memory operations which are to be executed, and a priority controller (PRIO-ST) for the various requests which relate to the respective initial reading, which is initiated by the execution processor (EXU), of an instruction block (EXURQ.RIE) into a first buffer half of an instruction buffer (IB) in the conditioning processor (PLU), to the reading of further instruction blocks when one buffer half of the instruction buffer (RIHRQ) is free or after jump instructions (PLURQ.RIR) and of operands (PLURQ.RO) by the conditioning processor (PLU), or to reading and/or writing (EXURQ.RD/WR) by the execution processor (EXU), wherein, of the requests of both processors (PLU and EXU) which compete with one another, those requests for reading instructions (PLURQ.RIR), which are initiated by a jump instruction, of the conditioning processor (PLU) being dealt with such that they have priority over the read and/or write requests (EXURQ.RD/WR) of the execution processor (EXU).

2. Data-processing system according to Claim 1, characterized in that the following ranking list is normally used, with decreasing priority, for taking into account the requests of both processors (EXU, PLU):
    1. initial reading of an instruction block (EXURQ.RIE),
    2. reading, initiated by a jump instruction, of an instruction block (PLURQ.RIR),
    3. reading and/or writing by the execution processor (EXURQ.RD/WR),
    4. operand reading by the conditioning processor (PLURQ.RO) and
    5. reading of the second or further instruction block (RIHRQ).

3. Data-processing system according to Claim 1 or 2, characterized in that the requests (RIHRQ) for subsequently reading an instruction block into a free buffer half of the instruction buffer (IBA or IBB) are differently prioritized as a function of a filling level, which can be preset, of the respectively active buffer half, and in that a predetermined priority is assigned to these prioritized requests (RIHRQ.PRIO).

4. Data-processing system having instruction processing which is carried out in accordance with the production line principle, comprising an instruction conditioning processor (PLU) for reading instructions (RI), instruction interpretation (IP), address calculation (AR) and parameter provision (PB), an instruction execution processor (EXU) for actually executing the instructions (AF), and a common user memory system (CA/MM) having a common interface for receiving requests from both processors (PLU, EXU) for memory operations which are to be executed, and a priority controller (PRIO-ST) for the various requests which relate to the respective initial reading, which is initiated by the execution processor (EXU), of an instruction block (EXURQ.RIE) into a first buffer half of an instruction buffer (IB) in the conditioning processor (PLU), to the reading of further instruction blocks when one buffer half of the instruction buffer (RIHRQ) is free or after jump instructions (PLURQ.RIR) and of operands (PLURQ.RO) by the conditioning processor (PLU), or to reading and/or writing (EXURQ.RD/WR) by the execution processor (EXU), the requests (RIHRQ) for subsequently reading an instruction block into a free buffer half of the instruction buffer (IBA or IBB) being prioritized as a function of a filling level, which can be preset, of the respectively active buffer half, and in that a predetermined priority is assigned to these prioritized requests (RIHRQ.PRIO).

5. Data-processing system according to Claim 3 or 4, characterized in that the priority which is assigned to the prioritized requests (RIHRQ.PRIO) can be set selectively.

6. Data-processing system according to Claim 5, characterized in that the following ranking sequence applies for taking into account the requests of both processors (EXU, PLU):
    1. initial reading of an instruction block (EXURQ.RIE),
    2. reading of the second or further instruction block in the case of the highest priority assignment (RIHRQ.PRIO3),
    3. reading, initiated by a jump instruction, of an instruction block (PLURQ.RIR),
    4. reading of the second or further instruction block in the case of an average priority assignment (RIHRQ.PRIO2),
    5. reading and/or writing by the execution processor (EXURQ.RD/WR),
    6. reading of the second or further instruction block in the case of the lowest priority assignment (RIHRQ.PRIO1),
    7. operand reading by the conditioning processor (PLURQ.RO) and
    8. reading of the second or further instruction block without any priority assignment (RIHRQ).

7. Data-processing system according to one of Claims 3 to 6, characterized in that the filling level of the respectively active buffer half is monitored by a comparator (VGA) using the progressive byte addressing (SELNIA...) for the respectively next instruction to be conditioned in comparison to a predetermined value (PRIOSEL...), and in that, if this value is exceeded and the other buffer half of the active buffer is free at the same time, the additional prioritized request signal (RIHRQ.PRIO) is produced by logic operation elements (U7, U8, OR4).

8. Data-processing system according to Claim 7 in conjunction with Claim 5 or 6, characterized in that the priority assignment for the prioritized request signal (RIHRQ.PRIO) is carried out by means of an adjustable selector switch (DEC, U21 to U23) which connects the prioritized request signal to an output having the corresponding priority as a function of a priority level (SETPRIO) which can be preset, which output is taken into account in a suitable manner by a ranking sequence network (U24 to U29, U14, OR21).

## Revendications

1. Installation de traitement de données dans laquelle le traitement des instructions s'effectue selon le principe pipeline, constituée par un microprocesseur (PLU) de préparation d'instructions pour la lecture (RI) d'instructions, l'interprétation (IP) d'instructions, le calcul d'adresses (AR) et la préparation (PB) de paramètres, par un processeur d'exécution d'instructions (EXU) pour l'exécution proprement dite (AF) des instructions, et par un système commun de mémoire de travail (CA/MM) comportant une interface commune pour la réception de demande des deux processeurs (PLU, EXU) pour des opérations de mémoire devant être exécutées, et une unité de commande de priorité (PRIO-ST) pour les différentes demandes, qui concernent la première lecture exécutée, déclenchée par le processeur d'exécution (EXU), d'un bloc d'instructions (EXURQ.RIR) dans une première moitié d'un tampon d'instructions (IB) du processeur de préparation (PLU), la lecture d'autres blocs d'instructions dans le cas où la moitié du tampon d'instructions (RIHRQ) est libre ou bien après des instructions de saut (PLURQ.RIR) et d'opérandes (PLURQ.R0) par le processeur de préparation (PLU), ou la lecture ou l'enregistrement (EXURQ.RD/WR) dans le processeur d'exécution (EXU), auquel cas parmi les demandes concurrentes des deux processeurs (PLU et EXU), les demandes pour la lecture d'instructions (PLURQ.RIR), déclenchée par une instruction de saut, du processeur de préparation (PLU) étant traitées d'une manière prioritaire par les demandes de lecture ou d'enregistrement (EXURQ.RD/WR) du processeur d'exécution (EXU).

2. Installation de traitement de données suivant la revendication 1, caractérisée par le fait que la liste de priorités indiquée ci-après, avec des priorités qui vont en diminuant est normalement valable pour la prise en compte des demandes des deux processeurs (EXU,PLU) :
   1. première lecture d'un bloc d'instructions (EXURQ.RIE),
   2. lecture d'un bloc d'instructions (PLURQ.RIR), déclenchée par une instruction de saut,
   3. lecture ou enregistrement par le processeur d'exécution (EXURQ.RD/WR),
   4. lecture d'opérandes par le processeur de préparation (PLURQ.R0), et
   5. Lecture du second ou d'autres blocs d'instructions (RIHRQ).

3. Installation de traitement de données suivant la revendication 1 ou 2, caractérisée par le fait que les demandes (RIHRQ) de lecture ultérieure d'un bloc d'instructions dans une moitié libre du tampon d'instructions (IBA ou IBB) reçoivent des priorités différentes en fonction du degré préréglable de remplissage de la moitié respectivement active du tampon et qu'une priorité prédéterminée est associée à ces demandes à priorité (RIHRQ.PRIO).

4. Installation de traitement de données dans laquelle le traitement des instructions s'effectue selon le principe pipeline, constituée par un microprocesseur (PLU) de préparation d'instructions pour la lecture (RI) d'instructions, l'interprétation (IP) d'instructions, le calcul d'adresses (AR) et la préparation (PB) de paramètres, par un processeur d'exécution d'instructions (EXU) pour l'exécution proprement dite (AF) des instructions, et par un système commun de mémoire de travail (CA/MM) comportant une interface commune pour la réception de demande des deux processeurs (PLU, EXU) pour des opérations de mémoire devant être exécutées, et une unité de commande de priorité (PRIO-ST) pour les différentes demandes, qui concernent la première lecture exécutée, déclenchée par le processeur d'exécution (EXU), d'un bloc d'instructions (EXURQ.RIR) dans une première moitié d'un tampon d'instructions (IB) du processeur de préparation (LU), la lecture d'autres blocs d'instructions dans le cas où la moitié du tampon d'instructions (RIHRQ) est libre ou bien après des instructions de saut (PLURQ.RIR) et d'opérandes (PLURQ.R0) par le processeur de préparation (PLU), ou la lecture ou l'enregistrement (EXURQ. RD/WR) dans le processeur d'exécution (EXU), auquel cas les demandes (RIHRQ) pour la lecture ultérieure d'un bloc d'instructions dans une moitié libre du tampon d'instructions (IBA ou IBB) sont affectées de priorités en fonction d'un degré de remplissage préréglable de la moitié respectivement active du tampon, et une priorité prédéterminée est affectée à ces demandes à priorité (RIHRQ.PRIO).

5. Installation de traitement de données suivant la revendication 3 ou 4, caractérisée par le fait que la priorité affectée aux demandes à priorité (RIHRQ.PRIO) est réglable au choix.

6. Installation de traitement de données suivant la revendication 5, caractérisée par le fait que la liste suivante de priorités est valable pour la prise en compte des demandes des deux processeurs (EXU, PLU) :
   1. première lecture d'un bloc d'instructions (EXURQ.RIE),
   2. lecture du second ou d'autres blocs d'instructions pour une affectation de priorité maximale (RIHRQ.PRIO3),

3. lecture d'un bloc d'instructions (PLURQ.RIR) déclenchée par une instruction de saut,

4. lecture du second ou d'autres blocs d'instructions pour une affectation de priorité moyenne (RIHRQ.PRIO2),

5. lecture ou enregistrement par le processeur d'exécution (EXURQ.RD/WR),

6. lecture du second ou d'autres blocs d'instructions pour l'affectation de priorité la plus faible (RIHRQ.PRIO1),

7. lecture d'opérandes par le processeur de préparation (PLURQ.RO), et

8. lecture du second ou d'autres blocs d'instructions sans affectation de priorité (RIHRQ).

7. Installation de traitement de données suivant l'une des revendications 3 à 6, caractérisée par le fait que le degré de remplissage de la moitié respectivement active du tampon est contrôlé par un comparateur (VGA) sur la base de l'adressage progressif d'octets (SELNIA...) pour l'instruction respectivement suivante devant être préparée, par comparaison à une valeur prédéterminée (PRIOSEL...), et que lors du dépassement de cette valeur et dans le cas où l'autre moitié du tampon actif est libre simultanément, le signal de demande supplémentaire à priorité (RIHRQ.PRIO) est produit par des circuits combinatoires logiques (U7,U8,OR4).

8. Installation de traitement de données suivant la revendication 7 en liaison avec la revendication 5 ou 6, caractérisée par le fait que l'affectation d'une priorité pour le signal de demande à priorité (RIHRQ.PRIO) s'effectue au moyen d'un commutateur de sélection réglable (DEC, U21 à U23), qui transmet le signal de demande, affecté d'une priorité, en fonction d'un échelon de priorité préréglable (SETPRIO), à une sortie affectée de la priorité correspondante, et qui est alors prise en compte de façon correspondante par un réseau de séquences de priorités (U24 à U29, U14, OR21).

FIG 1

FIG 2

FIG 3

FIG 4

FIG 5

FIG 6

FIG 7

# FIG 8

RI  L,MVC,L,(A)   A,MVC,A,L   C,L,...   . . .

IP  L  MVC  L  A   |   MVC  A  L  C   |   L

AR  L  MVC  L   |   A  MVC  A  L   |   C  L

PB  L  MVC   L  A  MVC  A   L  C  L

AF  L   MVC   L  A  MVC  A   L  C  L

SELNIA  ...0...   4  10  14  18   24  28  0  4   8

EXURQ  RIE   WR   WR
PLURQ        RO  RO  RO        RO  RO  RO      RO      RO  RO
RIHRQ    RIH        RIH PRIO        RIH  PRIO

MEMOP ...  RIE   RIH  RO  RO  RIH  WR  RO  RO  RO  RO  WR  RIH  RO  RO  RO
                 L  MVC      MVC  L  A  MVC  A  MVC      L  C  L

EOZ  1  2  3  4  5  6  7  8  9  10  11  12  13  14  15  16  17

START

17 EOZ

END

∑ PRIOSEL = 0        ∑ SETPRIO = 1

FIG 9